# EUROPÄISCHE PATENTSCHRIFT

(11) **EP 3 987 212 B1**
(45) Veröffentlichungstag und Bekanntmachung des Hinweises auf die Patenterteilung: **09.08.2023**
(21) Anmeldenummer: 20729970.2
(22) Anmeldetag: 26.05.2020
(51) Int. Cl.: F16L 41/02, F16L 41/03, B33Y 80/00

(54) **ABZWEIGSTÜCK FÜR EINE FLUIDLEITUNG**
BRANCH PIECE FOR A FLUID LINE
PIÈCE DE DÉRIVATION CONÇUE POUR UNE CONDUITE DE FLUIDE

(30) Priorität: 19.06.2019 DE 102019208976
(43) Veröffentlichungstag der Anmeldung: 27.04.2022
(73) Patentinhaber: Volkswagen AG, 38440 Wolfsburg (DE)
(72) Erfinder: DIEDRICH, Mathias, 38165 Lehre (DE)
(86) Internationale Anmeldenummer: PCT/EP2020/064483
(87) Internationale Veröffentlichungsnummer: WO 2020/254071

(56) Entgegenhaltungen:
- WO-A1-2019/021457
- DE-A1-102013 111 967
- FR-A5- 2 093 556

## Beschreibung

Die Erfindung betrifft ein Abzweigstück für eine Fluidleitung. Das Abzweigstück dient insbesondere der Verbindung von mehreren Fluidleitungen, wobei zumindest ein Fluidstrom in mindestens zwei Fluidströme aufgeteilt (oder umgekehrt: zusammengeführt) wird. Das Abzweigstück kann insbesondere in Kühlmittel-, Kältemittel-, Öl- oder Luft-Kreisläufen eingesetzt werden und ist insbesondere geeignet für eine Anwendung in einem Kraftfahrzeug.

Es ist bekannt, dass in Fluid-Kreisläufen Drosseln verwendet werden, die der Einstellung von unterschiedlichen Volumenströmen entlang unterschiedlicher Strömungspfade des Fluids dienen. Die Bereitstellung solcher Drosseln erfolgt als Einzelteil, so dass die Herstellung solcher Kreisläufe aufwendig ist.

Aus der CN 203478739 U ist ein Verteilstück für eine Klimaanlage bekannt. Dabei weisen die abzweigenden Leitungen Einsätze zur Drosselung eines Volumenstroms auf.

Aus der WO 2015/197612 A1 ist ein Verteilstück für ein Kühlmittel bekannt, bei dem eine Zuleitung in zwei Ableitungen aufgeteilt wird, wobei die Ableitungen einen geringeren Durchströmungsquerschnitt aufweisen und als Drosseln wirken.

Aus der DE 102013111967 A1 ist ein Kältemittelverteiler mit einem Einlasskanal sowie wenigstens zwei vom Einlasskanal abzweigenden Auslasskanälen bekannt, wobei der Kanalquerschnitt eines ersten Auslasskanals sich vom Kanalquerschnitt eines zweiten Auslasskanals unterscheidet. Ein axiales Ende des Einlasskanals definiert eine Verzweigungsstelle, wobei sich jeder Auslasskanal von der Verzweigungsstelle zu einem jeweiligen Auslassanschluss erstreckt.

Aufgabe der vorliegenden Erfindung ist es, die mit Bezug auf den Stand der Technik angeführten Probleme zumindest teilweise zu lösen. Insbesondere soll ein Abzweigstück vorgeschlagen werden, durch das die Herstellung eines Fluidkreislaufs vereinfacht werden kann.

Zur Lösung dieser Aufgaben trägt ein Abzweigstück mit den Merkmalen gemäß Patentanspruch 1 bei. Vorteilhafte Weiterbildungen sind Gegenstand der abhängigen Patentansprüche.

Es wird ein Abzweigstück für eine Fluidleitung, insbesondere ein Abzweigstück geeignet oder eingerichtet für ein Fluidkreislauf mit einer Mehrzahl von Fluidleitungen, vorgeschlagen. Das Abzweigstück umfasst zumindest einen ersten Zuflussanschluss mit einem ersten Zuflussquerschnitt, einen ersten Abflussanschluss mit einem ersten Drosselquerschnitt sowie einen zweiten Abflussanschluss mit einem zweiten Drosselquerschnitt. Die Abflussanschlüsse sind innerhalb des Abzweigstücks über jeweils einen Strömungspfad für ein Fluid mit dem ersten Zuflussanschluss verbunden. Die Drosselquerschnitte, insbesondere die durchströmbaren Flächen der Drosselquerschnitte, sind unterschiedlich groß.

Das Abzweigstück kann (dicht) an Fluidleitungen angeschlossen werden. Insbesondere kann eine Fluid(zu)leitung mit dem Zuflussanschluss verbunden werden. Insbesondere kann jeweils eine Fluid(ab)leitung mit jedem Abflussanschluss verbunden werden.

Ein in das Abzweigstück eingehender Volumenstrom kann über das Abzweigstück in vorbestimmter Weise aufgeteilt werden, wobei über den ersten Drosselquerschnitt ein erster Volumenstrom und über den zweiten Drosselquerschnitt ein zweiter (vom ersten abweichender) Volumenstrom eingestellt wird. Damit kann ein über den Zuflussanschluss in das Abzweigstück eintretender Volumenstrom in unterschiedlich große Volumenströme aufgeteilt werden. Insbesondere kann das Abzweigstück mehr als zwei Abflussanschlüsse aufweisen, wobei zumindest zwei, die Mehrheit oder sogar alle Abflussanschlüsse voneinander unterschiedliche Drosselquerschnitte aufweisen. Insbesondere können auch mehrere Zuflussanschlüsse vorgesehen sein, wobei bevorzugt jeder Zuflussanschluss mit allen oder einer Auswahl von Abflussanschlüssen verbunden ist.

Ein Drosselquerschnitt ist insbesondere ein kleinster durchströmbarer Querschnitt des jeweiligen Abflussanschlusses, so dass durch diesen Querschnitt ein Volumenstrom vorgebbar bzw. (im Betrieb) einstellbar ist. Als Querschnitt wird hier eine (frei) durchströmbare Fläche senkrecht zur Strömungsrichtung bzw. Erstreckungsrichtung betrachtet.

Insbesondere unterscheiden sich die (durchströmbare Fläche der) Drosselquerschnitte um mindestens 10 % voneinander, bevorzugt um mindestens 20 %, besonders bevorzugt um mindestens 40 %.

Der erste Abflussanschluss weist einen größten ersten Abflussquerschnitt und der zweite Abflussanschluss einen größten zweiten Abflussquerschnitt auf. Entlang zumindest eines der Strömungspfade ist einer der größten Abflussquerschnitte über einen Drosselquerschnitt mit dem ersten Zuflussquerschnitt verbunden, welcher Drosselquerschnitt, insbesondere dessen durchströmbare Fläche, höchstens 80 %, insbesondere höchstens 70 %, bevorzugt höchstens 50 %, dieses größten Abflussquerschnittes beträgt.

Insbesondere ist der Drosselquerschnitt eine Verengung des durchströmbaren Querschnitts entlang des Strömungspfads.

Ein größter Abflussquerschnitt ist insbesondere ein größter durchströmbarer Querschnitt des jeweiligen Abflussanschlusses.

Der größte erste Abflussquerschnitt und der größte zweite Abflussquerschnitt sind unterschiedlich groß.

Insbesondere unterscheiden sich die größten Abflussquerschnitte um mindestens 10 % voneinander, bevorzugt um mindestens 20 %, besonders bevorzugt um mindestens 40 %.

Insbesondere ist der erste Abflussanschluss über einen ersten Strömungspfad mit dem ersten Zuflussanschluss und der zweite Abflussanschluss über einen zweiten Strömungspfad mit dem ersten Zuflussanschluss verbunden, wobei entlang des ersten Strömungspfades zwischen dem größten ersten Abflussquerschnitt und dem ersten Zuflussquerschnitt der erste Drosselquerschnitt und entlang des zweiten Strömungspfades zwischen dem größten zweiten Abflussquerschnitt und dem ersten Zuflussquerschnitt der zweite Drosselquerschnitt angeordnet ist.

Insbesondere unterscheidet sich ein erstes Verhältnis von erstem Drosselquerschnitt und dem größten ersten Abflussquerschnitt (also erster Drosselquerschnitt / größter erster Abflussquerschnitt) von einem zweiten Verhältnis von zweitem Drosselquerschnitt und dem größten zweiten Abflussquerschnitt (also zweiter Drosselquerschnitt / größter zweiter Abflussquerschnitt).

Insbesondere unterscheiden sich die vorstehend genannten Verhältnisse um mindestens 10 % voneinander, bevorzugt um mindestens 20 %, besonders bevorzugt um mindestens 40 %.

Insbesondere weist jeder von Zuflussanschluss und Abflussanschluss einen Anschlussdurchmesser zum Anschluss einer Fluidleitung auf. Der Anschlussdurchmesser definiert das Anschlussmaß der Fluidleitung. Z. B. kann der Anschlussdurchmesser ein Innendurchmesser oder ein Außendurchmesser sein. Der Anschluss für die Fluidleitung kann als Schraubanschluss, Steckanschluss oder ähnliches ausgeführt sein.

Insbesondere sind ein Anschlussdurchmesser des ersten Abflussanschlusses und ein Anschlussdurchmesser des zweiten Abflussanschlusses jeweils gleich groß, so dass an die Abflussanschlüsse (trotz unterschiedlicher Drosselquerschnitte und ggf. unterschiedlicher größter Abflussquerschnitte) jeweils Fluidleitungen mit gleichen Anschlussmaßen anschließbar sind.

Ein Anschlussdurchmesser zumindest eines der Abflussanschlüsse, bevorzugt aller Abflussanschlüsse, und ein Anschlussdurchmesser des Zuflussanschlusses sind jeweils gleich groß, so dass an den zumindest einen Abflussanschluss und den Zuflussanschluss jeweils Fluidleitungen mit gleichen Anschlussmaßen anschließbar sind.

Insbesondere ist das Abzweigstück einteilig ausgeführt.

Einteilig ausgeführt bedeutet insbesondere, dass alle Bestandteile des Abzweigstücks (also erster Zuflussanschluss mit erstem Zuflussquerschnitt, erster Abflussanschluss mit erstem Drosselquerschnitt sowie zweiter Abflussanschluss mit zweitem Drosselquerschnitt; ggf. zusätzlich größte Abflussquerschnitte) stoffschlüssig miteinander verbunden sind und damit nicht ohne Zerstörung einzelner Teile voneinander trennbar sind.

Bevorzugt ist das Abzweigstück ein Spritzgussteil, bevorzugt hergestellt aus einem Kunststoff.

Alternativ kann das Abzweigstück durch ein additives Herstellungsverfahren (z. B. ein 3D-Druckverfahren) und/oder durch ein Pressverfahren und/oder durch ein Sinterverfahren hergestellt sein.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist darauf hinzuweisen, dass die Figuren und insbesondere die dargestellten Größenverhältnisse nur schematisch sind. Es zeigen:
- Fig. 1:: ein Abzweigstück in einer perspektivischen Ansicht;
- Fig. 2:: das Abzweigstück nach Fig. 1 in einer ersten Schnittansicht; und
- Fig. 3:: das Abzweigstück nach Fig. 1 und 2 in einer zweiten Schnittansicht.

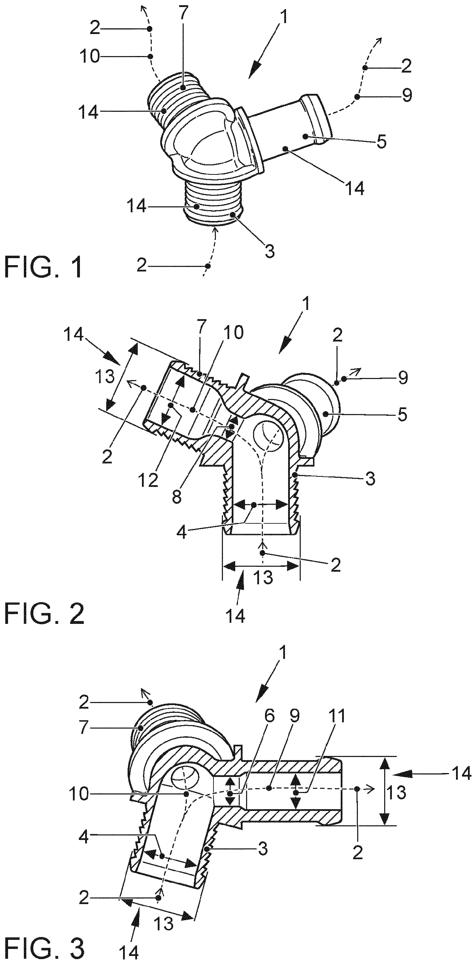

Fig. 1 zeigt ein Abzweigstück 1 in einer perspektivischen Ansicht. Fig. 2 zeigt das Abzweigstück 1 nach Fig. 1 in einer ersten Schnittansicht. Fig. 3 zeigt das Abzweigstück 1 nach Fig. 1 und 2 in einer zweiten Schnittansicht. Die Fig. 1 bis 3 werden im Folgenden gemeinsam beschrieben.

Das Abzweigstück 1 umfasst einen ersten Zuflussanschluss 3 mit einem ersten Zuflussquerschnitt 4, einen ersten Abflussanschluss 5 mit einem ersten Drosselquerschnitt 6 sowie einen zweiten Abflussanschluss 7 mit einem zweiten Drosselquerschnitt 8. Die Abflussanschlüsse 5, 7 sind innerhalb des Abzweigstücks 1 über jeweils einen Strömungspfad 9, 10 für ein Fluid mit dem ersten Zuflussanschluss 3 verbunden. Die Drosselquerschnitte 6, 8 sind unterschiedlich groß ausgeführt.

Das Abzweigstück 1 ist an Fluidleitungen 2 angeschlossen (angedeutet). Dabei ist eine Fluid(zu)leitung 2 mit dem Zuflussanschluss 3 verbunden. Jeweils eine Fluid(ab)leitung 2 ist mit jedem Abflussanschluss 5, 7 verbunden.

Der erste Abflussanschluss 5 weist einen größten ersten Abflussquerschnitt 11 und der zweite Abflussanschluss 7 einen größten zweiten Abflussquerschnitt 12 auf. Entlang jedes Strömungspfads 9, 10 ist einer der größten Abflussquerschnitte 11, 12 über jeweils einen Drosselquerschnitt 6, 8 mit dem ersten Zuflussquerschnitt 4 verbunden.

Der erste Abflussanschluss 5 ist über einen ersten Strömungspfad 9 mit dem ersten Zuflussanschluss 3 und der zweite Abflussanschluss 7 über einen zweiten Strömungspfad 10 mit dem ersten Zuflussanschluss 3 verbunden, wobei entlang des ersten Strömungspfades 9 zwischen dem größten ersten Abflussquerschnitt 11 und dem ersten Zuflussquerschnitt 4 der erste Drosselquerschnitt 6 und entlang des zweiten Strömungspfades 10 zwischen dem größten zweiten Abflussquerschnitt 12 und dem ersten Zuflussquerschnitt 4 der zweite Drosselquerschnitt 8 angeordnet ist.

Jeder von Zuflussanschluss 3 und Abflussanschlüsse 5, 7 weist einen Anschlussdurchmesser 13 zum Anschluss einer Fluidleitung 2 auf. Der Anschlussdurchmesser 13 definiert das Anschlussmaß 14 der Fluidleitung 2. Hier sind die Anschlussdurchmesser 13 jeweils Außendurchmesser der Anschlüsse 3, 5, 7. Hier sind die Anschlüsse 3, 5, 7 für die Fluidleitungen 2 in unterschiedlicher Weise ausgeführt. Die Fluidleitungen 2 werden in jedem Fall auf die Anschlüsse 3, 5, 7 aufgeschoben und ggf. am Anschluss 3, 5, 7 geklemmt.

Das Abzweigstück 1 ist einteilig ausgeführt.

### Bezugszeichenliste

- 1: Abzweigstück
- 2: Fluidleitung
- 3: erster Zuflussanschluss
- 4: erster Zuflussquerschnitt
- 5: erster Abflussanschluss
- 6: erster Drosselquerschnitt
- 7: zweiter Abflussanschluss
- 8: zweiter Drosselquerschnitt
- 9: erster Strömungspfad
- 10: zweiter Strömungspfad
- 11: größter erster Abflussquerschnitt
- 12: größter zweiter Abflussquerschnitt
- 13: Anschlussdurchmesser
- 14: Anschlussmaß

## Patentansprüche

1. Abzweigstück (1) für eine Fluidleitung (2), zumindest umfassend einen ersten Zuflussanschluss (3) mit einem ersten Zuflussquerschnitt (4), einen ersten Abflussanschluss (5) mit einem ersten Drosselquerschnitt (6) sowie einen zweiten Abflussanschluss (7) mit einem zweiten Drosselquerschnitt (8); wobei die Abflussanschlüsse (5, 7) innerhalb des Abzweigstücks (1) über jeweils einen Strömungspfad (9, 10) für ein Fluid mit dem ersten Zuflussanschluss (3) verbunden sind; wobei die Drosselquerschnitte (6, 8) unterschiedlich groß sind; wobei der erste Abflussanschluss (5) einen größten ersten Abflussquerschnitt (11) und der zweite Abflussanschluss (7) einen größten zweiten Abflussquerschnitt (12) aufweist, wobei entlang zumindest eines der Strömungspfade (9, 10) einer der größten Abflussquerschnitte (11, 12) über einen Drosselquerschnitt (6, 8) mit dem ersten Zuflussquerschnitt (4) verbunden ist, welcher Drosselquerschnitt (6, 8) höchstens 80 % dieses größten Abflussquerschnittes (11, 12) beträgt; wobei der größte erste Abflussquerschnitt (11) und der größte zweite Abflussquerschnitt (12) unterschiedlich groß sind und ein Anschlussdurchmesser (13) zumindest eines der Abflussanschlüsse (5, 7) und ein Anschlussdurchmesser (13) des Zuflussanschlusses (3) jeweils gleich groß sind, so dass an den zumindest einen Abflussanschluss (5, 7) und den Zuflussanschluss (3) jeweils Fluidleitungen (2) mit gleichen Anschlussmaßen (14) anschließbar sind.

2. Abzweigstück (1) nach Patentanspruch 1, wobei der erste Abflussanschluss (5) über einen ersten Strömungspfad (9) mit dem ersten Zuflussanschluss (3) und der zweite Abflussanschluss (7) über einen zweiten Strömungspfad (10) mit dem ersten Zuflussanschluss (3) verbunden ist; wobei entlang des ersten Strömungspfades (9) zwischen dem größten ersten Abflussquerschnitt (11) und dem ersten Zuflussquerschnitt (4) der erste Drosselquerschnitt (6) und entlang des zweiten Strömungspfades (10) zwischen dem größten zweiten Abflussquerschnitt (12) und dem ersten Zuflussquerschnitt (4) der zweite Drosselquerschnitt (8) angeordnet ist.

3. Abzweigstück (1) nach einem der vorhergehenden Patentansprüche, wobei ein erstes Verhältnis von erstem Drosselquerschnitt (6) und dem größten ersten Abflussquerschnitt (11) sich von einem zweiten Verhältnis von zweitem Drosselquerschnitt (8) und dem größten zweiten Abflussquerschnitt (12) unterscheidet.

4. Abzweigstück (1) nach einem der vorhergehenden Patentansprüche, wobei ein Anschlussdurchmesser (13) des ersten Abflussanschlusses (5) und ein Anschlussdurchmesser (13) des zweiten Abflussanschlusses (7) jeweils gleich groß sind, so dass an die Abflussanschlüsse (5, 7) jeweils Fluidleitungen (2) mit gleichen Anschlussmaßen (14) anschließbar sind.

5. Abzweigstück (1) nach einem der vorhergehenden Patentansprüche, wobei das Abzweigstück (1) einteilig ausgeführt ist.

6. Abzweigstück (1) nach einem der vorhergehenden Patentansprüche, wobei das Abzweigstück (1) ein Spritzgussteil ist.

## Claims

1. Branch piece (1) for a fluid line (2), at least comprising a first inflow connection (3) having a first inflow cross section (4), a first outlet connection (5) having a first throttle cross section (6) and a second outlet connection (7) having a second throttle cross section (8); wherein the outlet connections (5, 7) are connected inside the branch piece (1) to the first inflow connection (3) in each case via a flow path (9, 10) for a fluid; wherein the throttle cross sections (6, 8) have different sizes; wherein the first outlet connection (5) has a largest first outlet cross section (11) and the second outlet connection (7) has a largest second outlet cross section (12), wherein, along at least one of the flow paths (9, 10), one of the largest outlet cross sections (11, 12) is connected via a throttle cross section (6, 8) to the first inflow cross section (4), which throttle cross section (6, 8) is at most 80% of this largest outlet cross section (11, 12); wherein the largest first outlet cross section (11) and the largest second outlet cross section (12) have different sizes and a connection diameter (13) of at least one of the outlet connections (5, 7) and a connection diameter (13) of the inflow connection (3) are each of the same size, and therefore fluid lines (2) having the same connection dimensions (14) can be connected in each case to the at least one outlet connection (5, 7) and the inflow connection (3).

2. Branch piece (1) according to claim 1, wherein the first outlet connection (5) is connected via a first flow path (9) to the first inflow connection (3) and the second outlet connection (7) is connected via a second flow path (10) to the first inflow connection (3); wherein the first throttle cross section (6) is arranged along the first flow path (9) between the largest first outlet cross section (11) and the first inflow cross section (4), and the second throttle cross section (8) is arranged along the second flow path (10) between the largest second outlet cross section (12) and the first inflow cross section (4).

3. Branch piece (1) according to either of the preceding claims, wherein a first ratio of the first throttle cross section (6) and the largest first outlet cross section (11) differs from a second ratio of the second throttle cross section (8) and the largest second outlet cross section (12).

4. Branch piece (1) according to any of the preceding claims, wherein a connection diameter (13) of the first outlet connection (5) and a connection diameter (13) of the second outlet connection (7) are each of the same size, and therefore fluid lines (2) having the same connection dimensions (14) can be connected in each case to the outlet connections (5, 7).

5. Branch piece (1) according to any of the preceding claims, wherein the branch piece (1) is designed in one piece.

6. Branch piece (1) according to any of the preceding claims, wherein the branch piece (1) is an injection-molded part.

## Revendications

1. Pièce de dérivation (1) pour une conduite de fluide (2), comprenant au moins un premier raccord d'amenée (3) comportant une première section transversale d'amenée (4), un premier raccord d'évacuation (5) comportant une première section transversale de restriction (6) ainsi qu'un second raccord d'évacuation (7) comportant une seconde section transversale de restriction (8) ; dans laquelle les raccords d'évacuation (5, 7) sont reliés au premier raccord d'amenée (3) à l'intérieur de la pièce de dérivation (1) respectivement par le biais d'un trajet d'écoulement (9, 10) pour un fluide ; dans laquelle les sections transversales de restriction (6, 8) sont de dimensions différentes ; dans laquelle le premier raccord d'évacuation (5) présente une première section transversale d'évacuation (11) la plus grande et le second raccord d'évacuation (7) présente une seconde section transversale d'évacuation (12) la plus grande, dans laquelle le long d'au moins un des trajets d'écoulement (9, 10), une des sections transversales d'évacuation (11, 12) les plus grandes est reliée par le biais d'une section transversale de restriction (6, 8) à la première section transversale d'amenée (4), laquelle section transversale de restriction (6, 8) est d'au plus 80 % de cette section transversale d'évacuation (11, 12) la plus grande ; dans laquelle la première section transversale d'évacuation (11) la plus grande et la seconde section transversale d'évacuation (12) la plus grande sont de dimensions différentes et un diamètre de raccord (13) au moins d'un des raccords d'évacuation (5, 7) et un diamètre de raccord (13) du raccord d'évacuation (3) sont respectivement de dimensions identiques, de sorte qu'au niveau de l'au moins un raccord d'évacuation (5, 7) et du raccord d'amenée (3), des conduites de fluides (2) avec des cotes de raccordement (14) identiques puissent respectivement être raccordées.

2. Pièce de dérivation (1) selon la revendication 1, dans laquelle le premier raccord d'évacuation (5) est relié par le biais d'un premier trajet d'écoulement (9) au premier raccord d'amenée (3) et le second raccord d'évacuation (7) est relié par le biais d'un second trajet d'écoulement (10) au premier raccord d'amenée (3) ; dans laquelle le long du premier trajet d'écoulement (9), la première section transversale de restriction (6) est agencée entre la première section transversale d'évacuation (11) la plus grande et la première section transversale d'amenée (4) et le long du second trajet d'écoulement (10), la seconde section transversale de restriction (8) est agencée entre la seconde section transversale d'évacuation (12) la plus grande et la première section transversale d'amenée (4).

3. Pièce de dérivation (1) selon l'une quelconque des revendications précédentes, dans laquelle un premier rapport entre la première section transversale de restriction (6) et la première section transversale d'évacuation (11) la plus grande se différencie d'un second rapport entre la seconde section transversale de restriction (8) et la seconde section transversale d'évacuation (12) la plus grande.

4. Pièce de dérivation (1) selon l'une quelconque des revendications précédentes, dans laquelle un diamètre de raccord (13) du premier raccord d'évacuation (5) et un diamètre de raccord (13) du second raccord d'évacuation (7) sont respectivement de dimensions identiques, de sorte qu'au niveau des raccords d'évacuation (5, 7), des conduites de fluide (2) avec des cotes de raccordement (14) identiques puissent respectivement être raccordées.

5. Pièce de dérivation (1) selon l'une quelconque des revendications précédentes, dans laquelle la pièce de dérivation (1) est réalisée en une seule pièce.

6. Pièce de dérivation (1) selon l'une quelconque des revendications précédentes, dans laquelle la pièce de dérivation (1) est une pièce moulée par injection.
